Europäisches Patentamt

European Patent Office

Office européen des brevets

(11) Veröffentlichungsnummer : **0 429 811 B1**

(12) **EUROPÄISCHE PATENTSCHRIFT**

(45) Veröffentlichungstag der Patentschrift :
**14.07.93 Patentblatt 93/28**

(51) Int. Cl.⁵ : **E04G 21/16,** B65G 7/12,
E01C 19/52

(21) Anmeldenummer : **90119439.9**

(22) Anmeldetag : **10.10.90**

(54) **Einrichtung zum Heben von Hohlblockmauersteinen.**

(30) Priorität : **01.12.89 AT 2747/89**

(43) Veröffentlichungstag der Anmeldung :
**05.06.91 Patentblatt 91/23**

(45) Bekanntmachung des Hinweises auf die
Patenterteilung :
**14.07.93 Patentblatt 93/28**

(84) Benannte Vertragsstaaten :
**AT BE CH DE FR GB IT LI LU NL SE**

(56) Entgegenhaltungen :
**CA-A- 977 310**
**CH-A- 313 923**

(56) Entgegenhaltungen :
**DE-A- 2 919 407**
**FR-A- 2 362 071**
**GB-A- 18 204**
**GB-A- 1 576 923**
**US-A- 4 527 823**

(73) Patentinhaber : **GUNTRAM MOOSBRUGGER**
**Edlach 7**
**A-6850 Dornbirn (AT)**

(72) Erfinder : **GUNTRAM MOOSBRUGGER**
**Edlach 7**
**A-6850 Dornbirn (AT)**

(74) Vertreter : **Hefel, Herbert, Dipl.-Ing.**
**Egelseestrasse 65a Postfach 61**
**A-6800 Feldkirch (AT)**

EP 0 429 811 B1

Jouve, 18, rue Saint-Denis, 75001 PARIS

## Beschreibung

Die Erfindung bezieht sich auf eine Einrichtung zum Heben von Hohlblockmauersteinen mit den Merkmalen des Oberbegriffes des Patentanspruches 1.

Mauersteine, wie sie im modernen Bauwesen verwendet werden, haben erhebliche Abmessungen und auch dementsprechend ein erhebliches Gewicht. Ein großer Mauerstein hat ein Gewicht von 20 bis 30 kg. Solche Steine werden mit Hilfe von einfachen Hebezeugen verlegt, mit welchen der Mauerstein von einer Palette abgehoben und auf die zu errichtende Mauer abgesetzt wird. Der Mauerstein wird dabei mit einer vom Hebezeug getragenen Steinzange gefaßt. Diese besitzt zwei schenkelartig miteinander verbundene Hebelarme, die an ihren einen Enden gelenkig gelagerte Backen tragen, die beim Anheben des Mauersteines an dessen Seitenwangen außen anliegen. Das die Steinzange belastende Gewicht des Mauersteines schließt die Zange und hält sie geschlossen. Solche Steinzangen besitzen entweder einen selbsttätig wirkenden Schließmechanismus oder aber ein manuell zu betätigendes Schließgestänge. Der mit diesen Steinzangen verbundene Nachteil liegt darin, daß sie mit beiden Händen manipuliert werden müssen. Werden Mauersteine mit relativ glatten Oberflächen verlegt, so besteht darüberhinaus noch die Gefahr, daß bei einer ungeschickten oder nicht ganz ordnungsgemäßen Handhabung der Einrichtung ein Stein aus den Backen herausrutscht und die an der Errichtung eines Mauerwerkes Tätigen gefährdet.

Eine Einrichtung zum Heben dieser Art ist auch in der FR-PS 23 62 071 beschrieben und gezeigt. An einem horizontalen Holm sind endseitig bogenförmige Greifer scharnierartig angelenkt. Die einen Schenkel dieser bogenförmigen Greifer sind nach unten gerichtet, die anderen einander zugewandt, wobei an diesen oberen Enden über Scharniere Gewindespindeln angelenkt sind, die von einer Gewindemuffe aufgenommen sind. Die Gewinde der beiden Gewindespindeln sind gegenläufig, so daß beim Verdrehen der Muffe die beiden Gewindespindeln in die Muffe eingefahren oder - je nach Drehrichtung der Muffe - aus dieser ausgefahren werden. Im Mittelbereich des horizontalen Holmes ist ein U-förmiger Bügel schwenkbar gelagert, der in seiner aufrechten Stellung mit seinem oberen Teil die Gewindemuffe überragt, wobei dieser Bügel dazu vorgesehen ist, um ein Hebezeug anzusetzen. Auf dem horizontalen Holm ist ferner ein Ausgleichsgewicht verschieb- und arretierbar gelagert. An den nach unten gerichteten Enden der bogenförmigen Greifer sind einander zugewandte Backen angeordnet, die mittels Schrauben gegenüber dem jeweiligen bogenförmigen Greifer in der Höhe verstellbar sind. Diese Einrichtung ist nicht nur aufwendig konstruiert, ihre Handhabung ist auch umständlich. Der konstruktive Aufwand liegt insbesondere darin, daß an jedem Greifer mindestens zwei scharnierartige Verbindungen vorzusehen sind, ferner sind zur Handhabung dieser Einrichtung spezielle Werkzeuge erforderlich, um die Gewindemuffe zu verdrehen.

Von diesem Stand der Technik geht die Erfindung aus, und sie zielt darauf ab, eine Einrichtung vorzuschlagen, die diese Nachteile behebt, die vor allem mit einer einzigen Hand manipuliert werden kann und welche ausreichend große Haltekräfte aufzubringen imstande ist, um den gefaßten und angehobenen Mauerstein sicher zu halten. Die Erfindung, die diese Aufgabe löst, ist gekennzeichnet durch jene Merkmale, die Inhalt und Gegenstand des kennzeichnenden Teiles des Patentanspruches 1 sind.

Ausführungsbeispiele der Erfindung veranschaulichen die Zeichnungen. Es zeigen:

Fig. 1 die Einrichtung in Ansicht, z.T. aufgeschnitten und

Fig. 2 in Seitensicht;

Fig. 3 die Draufsicht auf einen Hohlblockmauerstein mit eingesetzter Einrichtung und

Fig. 4 ein Detail der Einrichtung, dies im Schnitt.

Die Einrichtung zum Heben von Hohlblocksteinen besitzt paarweise vorgesehene, L-förmige Greifer 1 und 2, die in einer Ebene liegen. Der eine Schenkel 3 eines jeden Greifers ist nach unten gerichtet. Die waagerechten Schenkel 4 sind einander zugewandt. An den Enden der einander zugewandten Schenkel 4 sind selbsthemmende Gewinde 5 vorgesehen, wobei das Gewinde des einen Schenkels als Rechtsgewinde und das Gewinde des anderen Schenkels als Linksgewinde ausgebildet ist. Diese Gewinde sind von fluchtend liegenden Gewindebohrungen 6 aufgenommen, die an den Stirnseiten einer Muffe 7 vorgesehen sind. Rechtwinklig zur Achse der fluchtenden Gewindebohrungen 6 ist an der Muffe 7 ein seitlich abstehender Handgriff 8 befestigt.

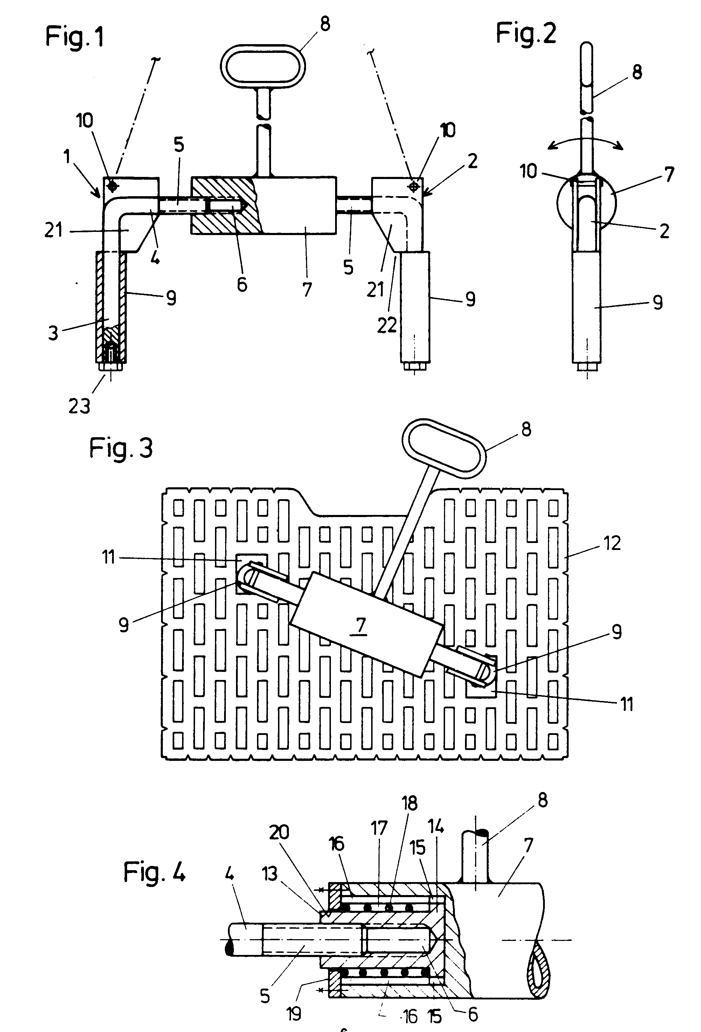

Auf die nach unten gerichteten Schenkel 3 der Greifer 1, 2 können, wie Fig. 1 veranschaulicht, harte, mit einer griffigen Oberfläche ausgestattete Stahlhülsen 9 aufgesteckt sein. Die Hülsen 9 können durch Kraftschluß, oder wie in der Zeichnung dargestellt, durch Formschluß befestigt sein. In diesem Fall ist an der unteren Stirnseite eines jeden Greifers eine Befestigungsschraube 23 eingedreht. Die Hülse 9 liegt mit ihrem unteren Rand auf dem Kopf dieser Befestigungsschraube auf. Der Kopf dieser Befestigungsschraube kann kegel- oder pyramidenförmig ausgestaltet sein.

Im Eckbereich der L-förmigen Greifer 1 und 2 sind Verstrebungsrippen 21 angeschweißt. Pro Eckbereich sind diese Verstrebungsrippen 21 paarweise vorgesehen und zweckmäßigerweise über einen Bolzen 10 miteinander verbunden. An diesem Bolzen kann ein hier nicht dargestelltes Hebezeug eingehängt werden, diese Holzen dienen sozusagen als Öse oder Haken für die Befestigung eines solchen Hebezeuges.

Fig. 3 zeigt nun die Verwendung der Einrichtung in Verbindung mit einem Hohlblockmauerstein. Die an einem Hebezeug hängende Einrichtung wird von einem Bedienungsmann zu einem auf einer Palette liegenden Hohlblockmauerstein 12 geführt und dann wird die Einrichtung abgesenkt, wobei die nach unten gerichteten Schenkel 3 in offenen Hohlkammern 11 des Hohlblockmauersteines 12 einfahren, bis die zusätzlich als Anschlag wirkenden Verstrebungsrippen 21 auf der Oberfläche des Hohlblockmauersteines 12 aufliegen. Der Handgriff 8 der Einrichtung steht vorerst beispielsweise nach oben oder nach der Seite. Sind die Köpfe der Befestigungsschraube pyramidenförmig oder kegelförmig ausgebildet, so wird dieses einfahren in den Hohlblockmauerstein 12 erleichtet. Ist die Einrichtung in der erläuterten Weise in den Hohlblockmauerstein 12 eingefahren, so wird der Handgriff 8 gefaßt und nun verschwenkt, und zwar in dem Sinne, daß die Schenkel 3 der Greifer 1 und 2 ihren Abstand entweder verringern oder vergrößern, wodurch sich diese Schenkel in den Hohlkammern 11 des Hohlblockmauersteines 12 verspannen, so daß der Stein nun in der Folge angehoben werden kann. Durch die Absätze 22 der Verstrebungsrippen 21 wird die Muffe soweit oberhalb der Oberfläche des Mauersteines gehalten, daß der Handgriff über einen Winkelbereich von mehr als 180° verschwenkt werden kann. Ist der Mauerstein 12 mit Hilfe des Hebezeuges auf der zu errichtenden Mauer abgesetzt, so wird der Handgriff 8 neuerlich verschwenkt, so daß sich die vorstehend erläuterte Verspannung löst, aufgehoben wird mit der Folge, daß die Einrichtung über das Hebezeug nun angehoben und für einen neuen Mauersteintransport freigegeben ist.

Im Zusammenhang mit Fig. 3 wurde erläutert, daß die Schenkel 3 der Einrichtung in Hohlkammern 11 eines Hohlblockmauersteines 12 eingefahren werden. Grundsätzlich wäre es natürlich auch möglich, mit dem Schenkel 3 der Einrichtung den Mauerstein 12 an seinen Außenseiten zu fassen.

Beim vorstehend beschriebenen Ausführungsbeispiel nach den Fig. 1 und 2 sind die Gewindebohrungen 6 direkt stirnseitig in der Muffe 7 eingearbeitet. Fig. 4 veranschaulicht nun im Detail und im Schnitt eine Ausführungsvariante: Hier ist die Gewindebohrung 6 in einer Buchse 13 vorgesehen, welche an ihrem inneren Ende einen flanschartigen Bund 14 aufweist, welcher mit radialabstehenden Nocken 15 in längsverlaufenden Nuten 16 der stirnseitig in der Muffe 7 vorgesehenen Bohrungen 17 verdrehsicher, jedoch axial verstellbar gelagert ist. An diesem Bund 14 stützt sich eine Feder 18 ab, die von der Buchse 13 durchsetzt ist, wobei das andere Ende der Feder 18 an der Innenseite eines die Bohrung 17 verschließenden Deckels 19 anliegt, durch dessen zentrale Bohrung 20 die Buchse 19 ragt. Diese Konstruktion kann für einen Greifer oder aber auch für beide Greifer vorgesehen werden. Die zum Heben und zum Transportieren eines Mauersteines notwendige Halte-, Klemm- oder Spreizkraft wird hier zum Teil von der Feder 18 aufgebracht.

L e g e n d e

z u   d e n   H i n w e i s z i f f e r n :

| | |
|---|---|
| 1 Greifer | 13 Buchse |
| 2 Greifer | 14 Bund |
| 3 Schenkel | 15 Klaue |
| 4 Schenkel | 16 Nute |
| 5 Gewinde | 17 Bohrung |
| 6 Gewindebohrung | 18 Feder |
| 7 Muffe | 19 Deckel |
| 8 Handgriff | 20 Bohrung |
| 9 Überzug | 21 Verstrebungsrippe |
| 10 Bolzen | 22 Absatz |
| 11 Hohlkammer | 23 Befestigungsschraube |
| 12 Hohlblockmauerstein | |

**Patentansprüche**

1. Einrichtung zum Heben von Hohlblockmauersteinen (12), mit einem Handgriff und mit paarweise vorgesehenen, in einer Ebene liegenden Greifern (1, 2), deren eine Schenkel (3) nach unten gerichtet sind und deren anderen Schenkel (4) einander zugewandt sind und an den Enden der einander zugewandten Schenkel (4) Gewinde (5) vorgesehen sind, wobei das Gewinde des einen Schenkels ein rechtsgängiges und das Gewinde des anderen Schenkels ein linksgängiges Gewinde ist und diese Gewinde (5) von fluchtend zueinander liegenden Gewindebohrungen (6) einer Muffe (7) aufgenommen sind, dadurch gekennzeichnet, daß die Greifer (1, 2) L-förmig sind und die Gewinde (5) an den Enden der einander zugewandten waagerechten Schenkel (4) selbsthemmend sind und die Muffe (7) den Handgriff (8) rechtwinklig zur Achse der fluchtenden Gewindebohrungen (6) seitlich abstehend aufweist.

2. Einrichtung nach Anspruch 1, dadurch gekennzeichnet, daß mindestens eine der Gewindebohrungen (6) in einer Buchse (13) vorgesehen ist, welche verdrehsicher in einer Ausnehmung (17) der Muffe angeordnet ist und die Buchse (13) durch die Kraft einer Feder (18) gegenüber der Stirnseite der Muffe (7) abgestützt und axial verschiebbar gelagert ist.

3. Einrichtung nach Anspruch 2, dadurch gekennzeichnet, daß die Buchse (13) an ihrer der Stirnseite der Muffe (7) abgewandten Seite einen Bund (14) aufweist, der als Widerlager für die von der Buchse (13) durchsetzte Feder (18) dient.

4. Einrichtung nach Anspruch 1, dadurch gekennzeichnet, daß im Eckbereich der Greifer (1, 2) Verstrebungsrippen (21) angebracht sind.

5. Einrichtung nach Anspruch 4, dadurch gekennzeichnet, daß an den Verstrebungsrippen (21) Bolzen (10), Haken oder Ösen zur Verbindung mit einem Hebezeug mit einen Hebezeug vorgesehen sind.

6. Einrichtung nach Anspruch 1, dadurch gekennzeichnet, daß die nach unten gerichteten Schenkel (3) der Greifer (1, 2) eine harte, aufgerauhte Stahlhülse tragen.

7. Einrichtung nach Anspruch 4, dadurch gekennzeichnet, daß die Verstrebungsrippen (21) an ihrer Unterseite einen als Anschlag dienenden Absatz (22) aufweisen.

8. Einrichtung nach Anspruch 6, dadurch gekennzeichnet, daß die Stahlhülse (9) mit ihrem unteren Rand auf dem Kopf einer Befestigungsschraube (23) aufsitzt.

9. Einrichtung nach Anspruch 8, dadurch gekennzeichnet, daß der Kopf der Befestigungsschraube (23) kegelig oder pyramidenförmig ausgebildet ist.


**Claims**

1. A device for lifting hollow building blocks (12), having a handle and having grippers (1, 2) provided as a pair and lying in one plane, the arms (3) of the said grippers (1, 2) being directed downwards and the other arms (4) facing each other and threads (5) being provided at the ends of the facing arms (4), wherein the thread of one arm is a right-hand thread and the thread of the other arm is a left-hand thread and these threads (5) are received by aligned threaded bores (6) of a sleeve (7), characterised in that the grippers (1, 2) are L-shaped and the threads (5) at the ends of the facing horizontal arms (4) are self-locking and the sleeve (7) has the handle (8) projecting laterally at right angles to the axis of the aligned threaded bores (6).

2. A device according to claim 1, characterised in that at least one of the threaded bores (6) is provided in a bush (13) which is arranged in a recess (17) of the sleeve so as to be torsionally secure and the bush (13) is supported by the force of a spring (18) in relation to the front end of the sleeve (7) and is axially displaceably mounted.

3. A device according to claim 2, characterised in that the bush (13) has a collar (14) on its end facing away from the front end of the sleeve (7), the said collar (14) serving as an abutment for the spring (18) through which the bush (13) passes.

4. A device according to claim 1, characterised in that bracing ribs (21) are provided in the corner region of the grippers (1, 2).

5. A device according to claim 4, characterised in that bolts (10), hooks or eyes are provided on the bracing ribs (21) for connection to a lifting device.

6. A device according to claim 1, characterised in that the downward pointing arms (3) of the grippers (1, 2) carry a hard, roughened steel casing.

7. A device according to claim 4, characterised in that the underside of the bracing ribs (21) is provided with a shoulder (22) which serves as a stop.

8. A device according to claim 6, characterised in that the lower edge of the steel casing (9) rests on the head of a fastening screw (23).

9. A device according to claim 8, characterised in that the head of the fastening screw (23) is formed so as to be tapered or pyramidal.


**Revendications**

1. Dispositif de levage de pierres à bâtir creuses (12) comportant une poignée et des pinces (1,2) disposées par paire dans un plan, dont les premières branches (3) sont tournées vers le bas et les secondes (4) sont en regard l'une de l'autre, des filets (5) étant prévus aux extrémités des branches (4) tournées l'une vers l'autre, dispositif dans lequel le filet d'une branche est un filet à droite et celui de l'autre branche est un filet à gauche, et les filets (5) sont reçus dans des alésages filetés (6) alignés mutuellement ménagés dans un manchon (7), caractérisé en ce que les pinces (1,2) ont une forme en L, les filets (5) sont autobloquants aux extrémités des branches horizontales (4) tournées l'une vers l'autre et le manchon (7) porte la poignée (8) perpendiculairement à l'axe des alésages filetés alignés, à distance latérale.

2. Dispositif selon la revendication 1, caractérisé en ce qu'au moins un des alésages filetés (6) est ménagé dans une douille (13) qui est agencée de manière rigide à la torsion dans un évidement (17) du manchon et la douille (13) est pressée contre la partie avant du manchon (7) par la force d'un ressort (18) et est montée de manière à pouvoir se déplacer axialement.

3. Dispositif selon la revendication 2, caractérisé en ce que la douille (13) présente sur son côté opposé à l'avant du manchon (7) une collerette (14) qui sert de butée pour le ressort (18) sollicité par la douille (13).

4. Dispositif selon la revendication 1, caractérisé en ce que des nervures de support (21) sont agencées aux coins des pinces (1,2).

5. Dispositif selon la revendication 4, caractérisé en ce que l'on prévoit sur les nervures de support (21) des boulons (10), des crochets ou des oeillets pour rattacher à un outil de levage.

6. Dispositif selon la revendication 1, caractérisé en ce que les branches (3) des pinces (1,2) tournées vers le bas portent un tube d'acier rugueux dur.

7. Dispositif selon la revendication 4, caractérisé en ce que les nervures de support (21) présentent un épaulement (22) servant de butée à leur partie inférieure.

8. Dispositif selon la revendication 6, caractérisé en ce que le tube d'acier (9) repose par son bord inférieur sur la tête d'une vis de fixation (23).

9. Dispositif selon la revendication 8, caractérisé en ce que la tête de la vis de fixation (23) a une forme conique ou pyramidale.

Fig.1

Fig.2

Fig.3

Fig.4

6